# EUROPÄISCHE PATENTSCHRIFT

(11) **EP 1 520 433 B1**
(45) Veröffentlichungstag und Bekanntmachung des Hinweises auf die Patenterteilung: **08.10.2008**
(21) Anmeldenummer: 03763602.4
(22) Anmeldetag: 09.07.2003
(51) Int. Cl.: H04Q 3/00

(54) **ERKENNUNG VON DIENST-MINDERLEISTUNGEN IN EINEM KOMMUNIKATIONSNETZ**
RECOGNITION OF REDUCED SERVICE CAPACITIES IN A COMMUNICATION NETWORK
IDENTIFICATION D'INSUFFISANCES DE RENDEMENT EN MATIERE DE SERVICES DANS UN RESEAU DE COMMUNICATION

(30) Priorität: 10.07.2002 DE 10231150
(43) Veröffentlichungstag der Anmeldung: 06.04.2005
(73) Patentinhaber: Nokia Siemens Networks GmbH & Co. KG, 81541 München (DE)
(72) Erfinder: SCHWAGMANN, Josef, 560 001 Bangalore, Karnataka (IN)
(86) Internationale Anmeldenummer: PCT/DE2003/002302
(87) Internationale Veröffentlichungsnummer: WO 2004/008784

(56) Entgegenhaltungen:
- WO-A-98/42102
- US-A- 5 893 905

## Beschreibung

Die vorliegende Erfindung betrifft ein Verfahren zur Erkennung von Dienst-Minderleistungen in einem Kommunikationsnetz, ein Kommunikationsnetzwerk-Steuerungs- und Überwachungssystem, ein Steuerungsprogramm für eine Kommunikationsverbindungsverwaltungseinrichtung und ein Steuerungsprogramm für eine Dienstgüte- und/oder eine Fehlerüberwachungseinrichtung.

US 5,893,905 A betrifft eine Überwachungseinheit zur automatisierten SLA (Service Level Agreement) Performance-Analyse. Dieser automatisierte SLA Monitor (ASM) ist als eine verteilte Computerplattform realisiert mit mindestens einer Konsole zum Extrahieren von Performance-Daten aktiver Mainframe Computer. Falls ein Dienst des SLA eine Verzögerung verursacht, zeigt der ASM dies dem Nutzer an und identifiziert den betroffenen Netzwerkpfad an dem der Dienst beteiligt ist zusammen mit allen abhängigen Diensten in downstream-Richtung. Auch wird der Einfluss des betroffenen Dienstes auf SLAabhängige Dienste festgestellt und dem Nutzer mitgeteilt.

Auf dem Telekommunikationsmarkt werden von Netzbetreibern zahlreiche Dienste an Kunden angeboten, insbesondere Internet-Dienste. Von Netzbetreibern angebotene Dienste werden in unterschiedliche Dienstgütestufen unterteilt, um Kundenbedürfnisse nach garantierten Dienstgüten zu erfüllen, und um sich gegenüber Mitbewerbern abzuheben. Beispielweise werden Dienste zu geringen Kosten für Privatkunden und Dienste mit erweitertem Umfang zu höheren Kosten für Geschäftskunden angeboten. Der erweiterte Umfang von Diensten besteht beispielsweise in einer Sicherstellung einer hohen Verfügbarkeit und eines geringen Datenverlustes. Hierzu werden zwischen Netzbetreiber und Kunde Dienstgütevereinbarungen (Service Level Agreement - SLA) getroffen, in welchen Umfang und Güte von gegenüber dem Kunden zu erbringenden Diensten festgelegt werden. Besondere Bedeutung kommt dabei einem Nachweis über eine Einhaltung der Dienstgütevereinbarung gegenüber dem Kunden zu. Für einen solchen Nachweis sind Dienste zu überwachen, um beispielsweise Ausfälle zu registrieren und die Verfügbarkeit eines Dienstes zu ermitteln. Außerdem werden Messungen durchgeführt, um Dienstgüteparameter, wie Datenverlust, zu erfassen. Eine Bereitstellung von Diensten beschränkt sich also nicht auf eine reine Administration von Diensteparametern, wie Bandbreite oder Rufnummer, sondern es werden außerdem dienstespezifische Zusatzfunktionen gesteuert.

Um Auswirkungen einer Nichteinhaltung einer Dienstgütevereinbarung sowohl für den Netzbetreiber als auch für den Kunden so gering wie möglich zu halten, ist eine zuverlässige und schnelle Erkennung von Dienst-Minderleistungen unabdingbar.

Der vorliegenden Erfindung liegt die Aufgabe zugrunde, ein Verfahren zu schaffen, das eine zuverlässige und schnelle Erkennung von Dienst-Minderleistungen ermöglicht, sowie eine geeignete Implementierung des Verfahrens und ein zur Durchführung des Verfahrens geeignetes Kommunikationsnetzwerk-Steuerungs- und Überwachungssystem anzugeben.

Diese Aufgabe wird erfindungsgemäß durch ein Verfahren mit den in Anspruch 1 angegebenen Merkmalen, ein Kommunikationsnetzwerk-Steuerungs- und Überwachungssystem mit den in Anspruch 8 angegebenen Merkmalen und ein Steuerungsprogramm mit den in Anspruch 9 bzw. 10 angegebenen Merkmalen gelöst. Vorteilhafte Weiterbildungen des erfindungsgemäßen Verfahrens sind in den abhängigen Ansprüchen angegeben.

Eine wesentliche Voraussetzung für eine zuverlässige Erkennung von Dienst-Minderleistungen besteht darin, daß erfindungsgemäß Informationen, die für eine Erbringung eines Dienstes relevante Netzelemente in ihren funktionalen Eigenschaften und in ihrer topologischen Anordnung beschreiben, einschließlich ihrer Zuordnung zum jeweiligen Dienst durch eine Einrichtung bzw. Änderung des Dienstes an eine Dienstgüte- bzw. Fehlerüberwachungseinrichtung bereitgestellt werden. Dies bewirkt, daß die bereitgestellten Informationen durch die Dienstgüte- bzw. Fehlerüberwachungseinrichtung mit erfaßten Meßwerten im wesentlichen unmittelbar nach ihrer Erfassung auf unzulässige Abweichungen verglichen werden können. Auf dieser Basis lassen sich dann schnell und nicht erst im Nachhinein Aussagen über Dienst-Minderleistungen ableiten, zumal die Zuordnung zum jeweils betroffenen Dienst in der Dienstgüte- bzw. Fehlerüberwachungseinrichtung bereits verfügbar ist. Aussagen über Dienst-Minderleistungen können dann umgehend zur Dienst-Minderleistungsbehebung oder zu Berichterstattungszwecken gemeldet werden.

Das Zurückgreifen auf einen bei der Einrichtung bzw. Änderung des Dienstes angelegten Datenbestand für die Dienstgüte- bzw. Fehlerüberwachung führt bereits im Ansatz zu einer Vermeidung einer Verwendung irrelevanter Daten. Dies bewirkt eine erhöhte Zuverlässigkeit bei der Erkennung von Dienst-Minderleistungen.

Die vorliegende Erfindung wird nachfolgend an einem Ausführungsbeispiel anhand der Zeichnung näher erläutert. Es zeigt
- Figur 1: ein Kommunikationsnetzwerk-Steuerungs- und Überwachungssystem in schematischer Darstellung,
- Figur 2: ein Diagramm zur Darstellung von Signalflüssen bei einer Einrichtung bzw. Änderung eines Dienstes,
- Figur 3: ein Diagramm zur Darstellung von Signalflüssen während eines Fehlerfalls.

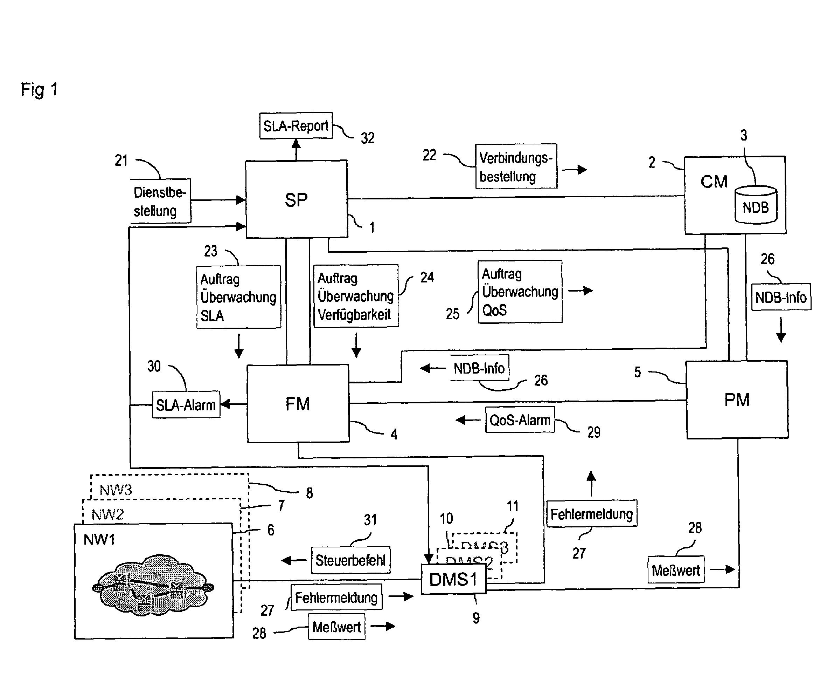

Das in Figur 1 schematisch dargestellte Kommunikationsnetzwerk-Steuerungs- und Überwachungssystem umfaßt eine Dienstebereitstellungseinrichtung 1, eine Kommunikationsverbindungverwaltungseinrichtung 2, eine Fehlerüberwachungseinrichtung 4 und eine Dienstgüteüberwachungseinrichtung 5. Die Dienstebereitstellungseinrichtung 1 ist zur Einrichtung bzw. Änderung von Diensten vorgesehen. Dabei nimmt die Dienstebereitstellungseinrichtung 1 Meldungen 21 mit Dienstbestellungen entgegen und setzt diese in Meldungen 22 mit Verbindungsbestellungen um, die an die Kommunikationsverbindungsverwaltungseinrichtung 2 übermittelt werden.

Die Kommunikationsverbindungsverwaltungseinrichtung 2 ist zur Abspeicherung von Information vorgesehen, die für eine Erbringung eines Dienstes relevante Netzelemente in ihrem funktionalen Eigenschaften und in ihrer topologischen Anordnung beschreiben. Diese Informationen werden zum jeweiligen Dienst zugeordnet und in einer der Kommunikationsverbindungsverwaltungseinrichtung 2 zugeordneten Netzelemente-Datenbasis 3 abgespeichert. Zu den für eine Erbringung eines Dienstes relevanten Netzelemente zählen beispielsweise Netzzugangspunkte, Anschlüsse und Leitungsverbindungen entlang eines Ende-zu Ende-Netzwerkpfades zwischen zwei Dienstzugangspunkten. Funktionale Eigenschaften von Netzelementen sind beispielsweise Bandbreite, unterstützte Kommunikationsprotokolle und verwendete Vermittlungstechnologien. Die Beschreibung der topologischen Anordnung von Netzelementen umfaßt eine Unterteilung der Netzelemente im Knoten-Netzelemente, wie Meßpunkte und Schaltstellen, und Kanten-Netzelementen, wie Leitungsverbindungen, und eine Aufbereitung als topologische Informationen entsprechend einem Knoten-Kanten-Modell. Die in der Netzelemente-Datenbasis 3 gespeicherten Informationen werden der Fehlerüberwachungseinrichtung 4 und der Dienstgüteüberwachungseinrichtung 5 abrufbar bereitgestellt.

Bei einer Einrichtung bzw. einer Änderung eines Dienstes wird von der Dienstebereitstellungseinrichtung 1 an die Fehlerüberwachungseinrichtung 4 eine Meldung mit einem Auftrag zur Überwachung der Verfügbarkeit von Netzelementen übermittelt, die für die Erbringung des jeweiligen Dienstes als relevant spezifiziert werden. In entsprechender Weise wird an die Dienstgüteüberwachungseinrichtung 5 eine Meldung 25 mit einem Auftrag zur Überwachung der Dienstgüte übermittelt. Durch diese Überwachungsaufträge werden die Fehlerüberwachungseinrichtung 4 und die Dienstgüteüberwachungseinrichtung 5 dazu veranlaßt, in Teilnetzen 6,7,8 erfaßte Fehlermeldungen 27 und Meßwerte 28, die über ein dem jeweiligen Teilnetz zugeordnetes Netzbediensystem 9,10,11 an die Fehlerüberwachungseinrichtung 4 bzw. die Dienstgüteüberwachungseinrichtung 5 weitergeleitet werden, mit den in der Netzelemente-Datenbasis 3 gespeicherten Informationen auf unzulässige Abweichungen zu vergleichen. Hierzu werden entsprechende Netzelemente-Datenbasis-Informationen durch die Fehlerüberwachungseinrichtung 4 bzw. die Dienstgüteüberwachungseinrichtung 5 abgefragt und als Meldungen 26 an diese übermittelt. Bei einer unzulässigen Abweichung von den in der Netzelemente-Datenbasis 3 gespeicherten Informationen wird durch die Fehlerüberwachungseinrichtung 4 bzw. Dienstgüteüberwachungseinrichtung 5 eine Meldung 29,30 über eine Dienst-Minderleistung unter Angabe des betroffenen Dienstes erzeugt.

Die Überwachung der Verfügbarkeit und der Dienstgüte erfolgt entsprechend einer zwischen einem Kunden und einem Netzbetreiber getroffenen Dienstgütevereinbarung. Daher werden in der Netzelemente-Datenbasis 3 nur Informationen zu den durch eine Dienstgütevereinbarung für die Erbringung eines Dienstes als relevant spezifizierten Netzelementen abgespeichert. Außerdem werden Fehlermeldungen bzw. Meßwerte nur zu den durch die Dienstgütevereinbarung für die Erbringung des Dienstes als relevant spezifizierten Netzelementen erfaßt. Zur Überwachung der im Rahmen einer Dienstgütevereinbarung festgelegten Bestimmungen wird bei einer Einrichtung bzw. Änderung eines Dienstes eine Meldung 23 mit einem Auftrag zur Überwachung einer Dienstgütevereinbarung von der Dienstebereitstellungseinrichtung 1 an die Fehlerüberwachungseinrichtung 4 übermittelt. Dies bedeutet das eine Erfassung von Fehlermeldungen bzw. Meßwerten zu durch die Dienstgütevereinbarung für die Erbringung eines Dienstes als relevant spezifizierten Netzelementen bereits durch die Einrichtung bzw. Änderung des entsprechenden Dienstes veranlaßt wird.

Ergibt die Auswertung eines Meßwertes 28 in der Dienstgüteüberwachungseinrichtung 5, das ein Netzelement außerhalb eines zulässigen Betriebsbereichs betrieben wird, so wird von der Dienstgüteüberwachungseinrichtung 5 eine Alarmmeldung 29 über eine Verletzung eines Dienstsgütekriteriums an die Fehlerüberwachungseinrichtung 4 übermittelt und dort in eine Alarmmeldung 30 über eine Verletzung einer Dienstgütevereinbarung umgesetzt. Eine Fehlermeldung 27 wird in der Fehlerüberwachungseinrichtung 4 direkt in eine Alarmmeldung über die Verletzung einer Dienstgütevereinbarung umgesetzt. Die Alarmmeldung 30 enthält eine Aussage über die Dienstverfügbarkeit bzw. Dienstgüte und wird zur Dienst-Minderleistungsbehebung an ein Netzbediensystem 9,10,11 übermittelt, das dem Teilnetz 6,7,8 zugeordnet ist, in dem ein Fehler bzw. eine Verletzung des Dienstgütekriteriums auftritt. Durch das jeweilige Netzbediensystem 9,10,11 wird die Alarmmeldung 30 in einen Steuerbefehl 31 umgesetzt, der als Meldung zur Dienst-Minderleistungsbehebung an eine ausgewählte, nicht explizit dargestellte Steuereinrichtung im jeweiligen Teilnetz 6,7,8 übermittelt wird. Zur Dienst-Minderleistungsbehebung erfolgt eine Umkonfigurierung des von der Dienst-Minderleistungsbehebung betroffenen Netzelementes unter Zugriff auf die in der Netzelemente-Datenbasis 3 gespeicherten Informationen durch das jeweilige Netzbediensystem 9,10,11. Dies gilt auch für eine Konfiguration eines Netzelementes bei einer Einrichtung, Änderung bzw. Löschung eines Dienstes.

Die Alarmmeldung 30 über eine Verletzung einer Dienstgütevereinbarung wird ebenfalls an die Dienstebereitstellungseinrichtung 1 übermittelt. Dort wird sie mit Kundendaten aufbereitet und in einen Bericht 32 über eine Einhaltung bzw. Verletzung einer Dienstgütevereinbarung umgesetzt.

Die Implementierung der in der Dienstebereitstellungseinrichtung 1, der Kommunikationsverbindungsverwaltungseinrichtung 2, der Fehlerüberwachungseinrichtung 4 und der Dienstgüteüberwachungseinrichtung 5 durchgeführten Verfahrensschritte erfolgt jeweils durch ein für die Dienstebereitstellungseinrichtung 1, die Kommunikationsverbindungsverwaltungseinrichtung 2, die Fehlerüberwachungseinrichtung 4 und die Dienstgüteüberwachungseinrichtung 5 vorgesehenes Steuerungsprogramm. Das jeweilige Steuerungsprogramm läuft dabei auf einer der Dienstebereitstellungseinrichtung 1, der Kommunikationsverbindungsverwaltungseinrichtung 2, der Fehlerüberwachungseinrichtung 4 bzw. der Dienstgüteüberwachungseinrichtung 5 zugeordneten Datenverarbeitungsanlage ab. Je nach Anwendungsfall ist auch eine Nutzung einer gemeinsamen Datenverarbeitungsanlage möglich, auf der die genannten Steuerungsprogramme entweder separat oder als zusammengefaßte Steuerungsprogramme ablaufen.

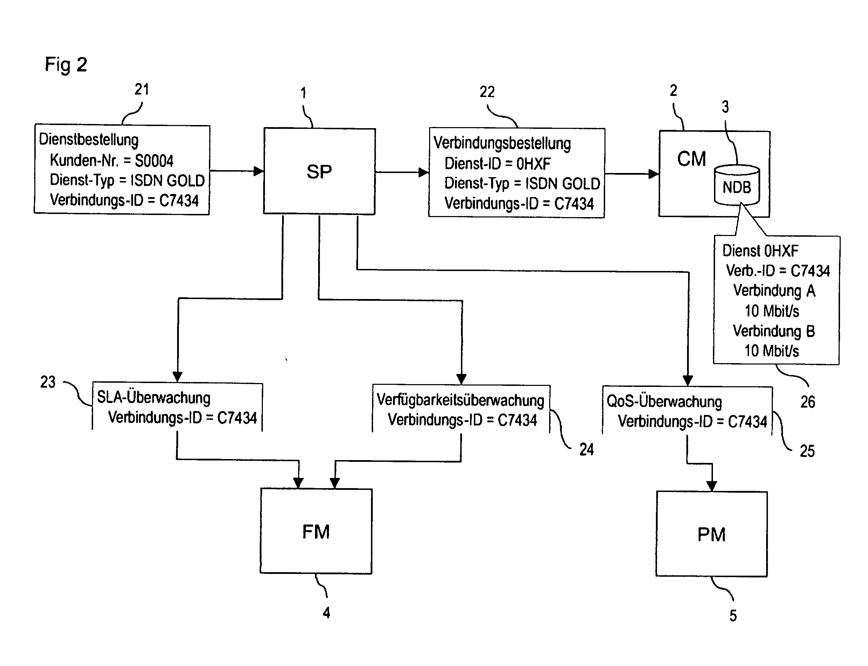

In Figur 2 sind die bereits in Figur 1 dargestellten Signalflüsse für den Fall einer Einrichtung bzw. einer Änderung eines Dienstes detaillierter dargestellt. Die Meldung 21 mit der Dienstbestellung 21 enthält Angaben, wie Kundennummer, Diensttyp oder einen Identifikator der für den jeweiligen Dienst bereitzustellenden Verbindung im Netz. Die Verbindung wird dabei im wesentlichen durch einen Anfangs- und einen Endpunkt eines Dienstzugriffes identifiziert. In der Dienstebereitstellungseinrichtung 1 werden die in der Meldung 21 über die Dienstbestellung enthaltenen Informationen bereits abgespeicherten Kundendaten zugeordnet und in eine Meldung 22 über eine Verbindungsbestellung umgesetzt. Diese Meldung 22 wird an die Kommunikationsverbindungsverwaltungseinrichtung 2 übermittelt und enthält Angaben, wie einen eindeutigen Dienstidentifikator, den Diensttyp und den Verbindungsidentifikator. In der Kommunikationsverbindungsverwaltungseinrichtung 2 wird aus der Meldung 22 über eine Verbindungsbestellung ein Datensatz für die Netzelemente-Datenbasis 3 aufgebaut. Dieser Datensatz enthält den Dienstidentifikator, den Verbindungsidentifikator und Angaben über Teilverbindungen, deren kennzeichnende funktionale Eigenschaften, wie Datenrate und Latenzenzzeit, ebenfalls in der Netzelemente-Datenbasis 3 abgespeichert werden. Mit der Einrichtung bzw. Änderung des Dienstes werden Meldungen 23,24,25 mit Überwachungsaufträgen an die Fehlerüberwachungseinrichtung 4 bzw. die Dienstgüteüberwachungseinrichtung 5 übermittelt. Zur Verknüpfung der jeweiligen Überwachungsaufträge 23,24,25 mit Datensätzen der Netzelemente-Datenbasis 3 enthalten die Meldungen 23,24,25 eine Angabe über den Verbindungsidentifikator als Verknüpfungselement zu den Datensätzen der Netzelemente-Datenbasis 3.

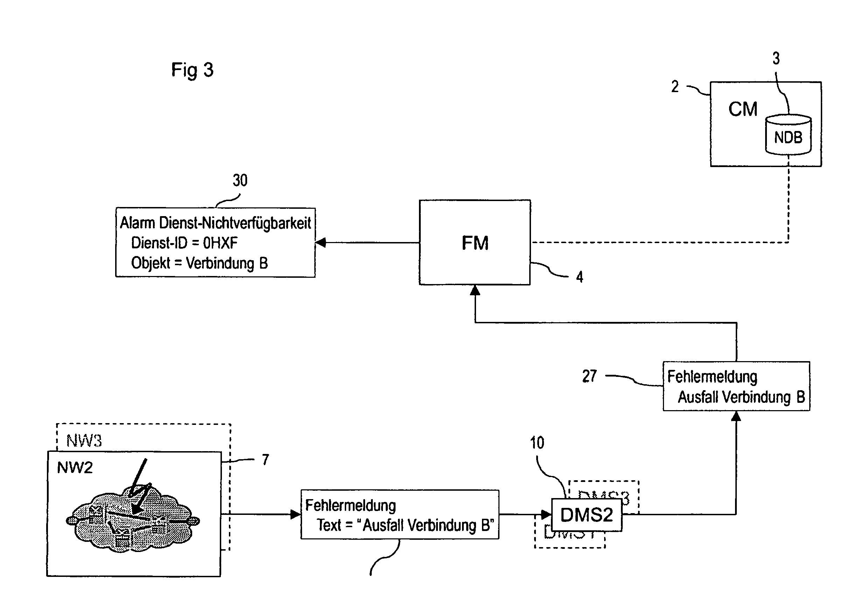

Im Falle eines Fehlers, beispielsweise dem Ausfall einer Verbindung, wird eine Fehlermeldung 27 von einer nicht näher dargestellten Überwachungseinrichtung im betroffenen Teilnetz 7 an das dem betroffenen Teilnetz 7 zugeordnete Netzbediensystem 10 übermittelt, dort ausgewertet und anschließend an die Fehlerüberwachungseinrichtung 4 weitergeleitet (Figur 3). Die Fehlerüberwachungseinrichtung 4 gleicht die in der Fehlermeldung 27 enthaltenen Angaben mit den in der Netzelemente-Datenbasis 3 enthaltenen Informationen ab und erzeugt eine Alarmmeldung 30 über eine Dienstnichtverfügbarkeit 30, sofern der Ausfall der Verbindung eine Dienstgütevereinbarung berührt. Die Alarmmeldung 30 über die Dienstnichtverfügbarkeit enthält Angaben über den jeweiligen Dienstidentifikator und eine Nennung des nichtverfügbaren Objektes bzw. Netzelements.

Die Anwendung der vorliegenden Erfindung ist nicht auf das hier beschriebene Ausführungsbeispiel beschränkt.

## Patentansprüche

1. Verfahren zur Erkennung von Dienst-Minderleistungen in einem Kommunikationsnetz, bei dem
- bei einer Einrichtung und/oder Änderung eines Dienstes für eine Erbringung des Dienstes relevante Netzelemente in ihren funktionalen Eigenschaften und in ihrer topologischen Anordnung beschreibende Informationen in einer Netzelemente-Datenbasis (3) abgespeichert und dem Dienst zugeordnet werden,
- die in der Netzelemente-Datenbasis (3) gespeicherten Informationen einer Dienstgüte- (5) und/oder einer Fehlerüberwachungseinrichtung (4) bereitgestellt werden,
- erfasste Messwerte durch die Dienstgüte- (5) und/oder die Fehlerüberwachungseinrichtung (6) mit den in der Netzelemente- Datenbasis (3) gespeicherten Informationen auf unzulässige Abweichungen verglichen werden,
- bei einer unzulässigen Abweichung eine Meldung (29, 30) über eine Dienst-Minderleistung unter Angabe des betroffenen Dienstes erzeugt wird.

2. Verfahren nach Anspruch 1, bei dem Informationen zu durch eine Dienstgütevereinbarung für die Erbringung des Dienstes als relevant spezifizierten Netzelementen in der Netzelemente-Datenbasis abgespeichert werden und bei dem Messwerte zu durch die Dienstgütevereinbarung für die Erbringung des Dienstes als relevant spezifizierten Netzelementen erfasst werden.

3. Verfahren nach einem der Ansprüche 1 bis 2, bei dem die Meldung eine Aussage über Dienstgüte und/oder - Verfügbarkeit enthält.

4. Verfahren nach einem der Ansprüche 1 bis 3, bei dem die Meldung über eine Dienst-Minderleistung an ein Netzbediensystem zur Dienst-Minderleistungsbehebung übermittelt wird.

5. Verfahren nach einem der Ansprüche 1 bis 4, bei dem die in der Netzelemente-Datenbasis gespeicherten Informationen zulässige Betriebsbereiche der Netzelemente beschreiben.

6. Verfahren nach einem der Ansprüche 1 bis 5, bei dem bei einer Einrichtung, Änderung und/oder Löschung eines Dienstes von der Einrichtung, Änderung und/oder Löschung betroffene Netzelemente durch ein auf die in der Netzelemente-Datenbasis gespeicherten Informationen zugreifendes Netzbediensystem konfiguriert werden.

7. Verfahren nach einem der Ansprüche 1 bis 6, bei dem eine Erfassung von Messwerten zu durch die Dienstgütevereinbarung für die Erbringung des Dienstes als relevant spezifizierten Netzelementen bei der Einrichtung und/oder Änderung des Dienstes veranlasst wird.

8. Kommunikationsnetzwerk-Steuerungs- und Überwachungssystem mit
- einer Dienstebereitstellungseinrichtung (1) zur Einrichtung und/oder Änderung eines Dienstes,
- einer Kommunikationsverbindungsverwaltungseinrichtung (2) zur Abspeicherung von für eine Erbringung des Dienstes relevante Netzelemente in ihren funktionalen Eigenschaften und in ihrer topologischen Anordnung beschreibenden Informationen in einer der Kommunikationsverbindungsverwaltungseinrichtung zugeordneten Netzelemente-Datenbasis (3) , zur Zuordnung dieser Informationen zum Dienst und zur Bereitstellung der in der Netzelemente-Datenbasis (3) gespeicherten Informationen an ein Dienstgüte- (5) und/oder eine Fehlerüberwachungseinrichtung (4),
- einer Dienstgüte- (5) und/oder einer Fehlerüberwachungseinrichtung (4) zum Vergleich erfasster Messwerte mit den in der Netzelemente-Datenbasis (3) gespeicherten Informationen auf unzulässige Abweichungen und zur Erzeugung einer Meldung über eine Dienst-Minderleistung unter Angabe des betroffenen Dienstes bei einer unzulässigen Abweichung.

9. Steuerungsprogramm für eine Kommunikationsverbindungsverwaltungseinrichtung eines Kommunikationsnetzwerk-Steuerungs- und Überwachungssystem gemäß Anspruch 8, das in einen Arbeitsspeicher einer der Kommunikationsverbindungsverwaltungseinrichtung zugeordneten Datenverarbeitungsanlage ladbar ist und zumindest einen Codeabschnitt aufweist, bei dessen Ausführung
- bei einer Einrichtung und/oder Änderung eines Dienstes für eine Erbringung des Dienstes relevante Netzelemente in ihren funktionalen Eigenschaften und in ihrer topologischen Anordnung beschreibende Informationen in einer Netzelemente-Datenbasis abgespeichert und dem Dienst zugeordnet werden,
- die in der Netzelemente-Datenbasis gespeicherten Informationen einer Dienstgüte- und/oder einer Fehlerüberwachungseinrichtung bereitgestellt werden, wenn das Computerprogramm in der Datenverarbeitungsanlage abläuft.

10. Steuerungsprogramm für eine Dienstgüte- und/oder eine Fehlerüberwachungseinrichtung eines Kommunikationsnetzwerk-Steuerungs- und Überwachungssystem gemäß Anspruch 8, das in einen Arbeitsspeicher einer der Dienstgüte- und/oder eine Fehlerüberwachungseinrichtung zugeordneten Datenverarbeitungsanlage ladbar ist und zumindest einen Codeabschnitt aufweist, bei dessen Ausführung
- erfasste Messwerte mit in einer Netzelemente-Datenbasis gespeicherten Informationen, für eine Erbringung eines Dienstes relevante Netzelemente in ihren funktionalen Eigenschaften und in ihrer topologischen Anordnung beschreibende, auf unzulässige Abweichungen verglichen werden,
- bei einer unzulässigen Abweichung eine Meldung über eine Dienst-Minderleistung unter Angabe des betroffenen Dienstes erzeugt wird, wenn das Computerprogramm in der Datenverarbeitungsanlage abläuft.

## Claims

1. Method for recognizing reduced service capacities in a communication network, in which
- when setting up and/or changing a service, information which describes the functional properties and the topological arrangement of network elements relevant to the provision of the service is stored in a network element database (3) and is assigned to the service,
- the information stored in the network element database (3) is made available to a quality of service (5) device and/or a fault monitoring device (4),
- the quality of service device (5) and/or the fault monitoring device (6) compare(s) recorded measured values with the information stored in the network element database (3) with respect to impermissible deviations,
- in the event of an impermissible deviation, a message (29, 30) relating to a reduced service capacity and stating the affected service is generated.

2. Method according to Claim 1, in which information relating to network elements specified as relevant to the provision of the service by a service level agreement is stored in the network element database, and in which measured values relating to network elements specified as relevant to the provision of the service by the service level agreement are recorded.

3. Method according to either of Claims 1 and 2, in which the message contains a statement of the quality of service and/or availability.

4. Method according to one of Claims 1 to 3, in which the message relating to a reduced service capacity is transmitted to a network operating system in order to eliminate the reduced service capacity.

5. Method according to one of Claims 1 to 4, in which the information stored in the network element database describes permissible operating ranges of the network elements.

6. Method according to one of Claims 1 to 5, in which, in the event of a service being set up, changed and/or cancelled, network elements affected by the setting-up, change and/or cancellation are configured by a network operating system which accesses the information stored in the network element database.

7. Method according to one of Claims 1 to 6, in which the recording of measured values relating to network elements specified as relevant to the provision of the service by the service level agreement is induced when setting up and/or changing the service.

8. Communication network control and monitoring system having
- a service-providing device (1) for setting up and/or changing a service,
- a communication link management device (2) for storing information which describes the functional properties and the topological arrangement of network elements relevant to the provision of the service in a network element database (3) assigned to the communication link management device, for assigning this information to the service and for providing a quality of service device (5) and/or a fault monitoring device (4) with the information stored in the network element database (3),
- a quality of service device (5) and/or a fault monitoring device (4) for comparing recorded measured values with the information stored in the network element database (3) with respect to impermissible deviations and for generating a message relating to a reduced service capacity and stating the affected service in the event of an impermissible deviation.

9. Control program for a communication link management device of a communication network control and monitoring system according to Claim 8, which program can be loaded into a main memory of a data processing system assigned to the communication link management device and has at least one code section, in the event of the execution of which
- when setting up and/or changing a service, information which describes the functional properties and the topological arrangement of network elements relevant to the provision of the service is stored in a network element database and is assigned to the service,
- the information stored in the network element database is made available to a quality of service device and/or a fault monitoring device when the computer program runs in the data processing system.

10. Control program for a quality of service device and/or a fault monitoring device of a communication network control and monitoring system according to Claim 8, which program can be loaded into a main memory of a data processing system assigned to the quality of service device and/or a fault monitoring device and has at least one code section, in the event of the execution of which
- recorded measured values are compared with information which is stored in a network element database and describes the functional properties and the topological arrangement of network elements relevant to the provision of a service with respect to impermissible deviations,
- a message relating to a reduced service capacity and stating the affected service is generated in the event of an impermissible deviation if the computer program runs in the data processing system.

## Revendications

1. Procédé pour identifier des insuffisances de service dans un réseau de communication dans lequel
- lors d'une mise en place et/ou modification d'un service, des informations décrivant des éléments de réseau importants pour une exécution du service dans leurs propriétés fonctionnelles et dans leur agencement topologique sont mémorisées dans une base de données d'éléments de réseau (3) et sont attribuées au service,
- les informations, stockées dans la base de données d'éléments de réseau (3), d'un dispositif de contrôle de qualité de service (5) et/ou d'un dispositif de contrôle d'erreur (4) sont mises à disposition,
- des valeurs de mesure enregistrées sont comparées par le dispositif de contrôle de qualité de service (5) et/ou du dispositif de contrôle d'erreur (6) avec les informations stockées dans la base de données d'éléments de réseau (3) au niveau d'écarts inacceptables,
- dans le cas d'un écart inacceptable, un message (29, 30) concernant une insuffisance de service est généré avec l'indication du service concerné.

2. Procédé selon la revendication 1, dans lequel des informations concernant des éléments de réseau spécifiés comme étant importants par un accord de qualité de service pour l'exécution du service sont mémorisées dans la base de données d'éléments de réseau et dans lequel des valeurs mesurées concernant des éléments de réseau spécifiés comme étant importants par l'accord de qualité de service pour l'exécution du service sont enregistrées.

3. Procédé selon l'une quelconque des revendications 1 à 2, dans lequel le message contient un renseignement concernant la qualité de service et/ou la disponibilité.

4. Procédé selon l'une quelconque des revendications 1 à 3, dans lequel le message concernant une insuffisance de service est transmis à un système de commande de réseau pour la suppression de l'insuffisance de service.

5. Procédé selon l'une quelconque des revendications 1 à 4, dans lequel les informations mémorisées dans la base de données d'éléments de réseau décrivent des plages de service autorisées des éléments de réseau.

6. Procédé selon l'une quelconque des revendications 1 à 5, dans lequel, lors d'une mise en place, d'une modification et/ou lors d'un effacement d'un service, des éléments de réseau concernés par la mise en place, la modification et/ou l'effacement sont configurés par un système de commande de réseau qui a recours aux informations stockées dans la base de données d'éléments de réseau.

7. Procédé selon l'une quelconque des revendications 1 à 6, dans lequel un enregistrement de valeurs mesurées concernant des éléments de réseau spécifiés comme étant importants par l'accord de qualité de service pour l'exécution du service est ordonné lors de la mise en place et/ou de la modification du service.

8. Système de commande et de contrôle de réseau de communication comprenant
- un dispositif de mise à disposition de service (1) pour la mise en place et/ou la modification d'un service,
- un dispositif de gestion de liaison de communication (2) pour le stockage d'informations décrivant des éléments de réseau importants pour une exécution du service dans leurs propriétés fonctionnelles et dans leur agencement topologique dans une base de données d'éléments de réseau (3) attribuée au dispositif de gestion de liaison de communication, pour l'attribution de ces informations au service et pour la mise à disposition des informations stockées dans la base de données d'éléments de réseau (3) à un dispositif de contrôle de qualité de service (5) et/ou un dispositif de contrôle d'erreur (4),
- un dispositif de contrôle de qualité de service (5) et/ou un dispositif de contrôle d'erreur (4) pour la comparaison de valeurs mesurées enregistrées avec les informations stockées dans la base de données d'élément de réseau (3) au niveau des écarts inacceptables et pour générer un message concernant une insuffisance de service avec indication du service concerné dans le cas d'un écart inacceptable.

9. Programme de commande pour un dispositif de gestion de liaison de communication d'un système de commande et de contrôle de réseau de communication selon la revendication 8, qui peut être chargé dans une mémoire de travail d'une installation de traitement de données attribuée au dispositif de gestion de liaison de communication et présente au moins une partie de code, lors de l'exécution de laquelle
- lors d'une mise en place et/ou d'une modification d'un service, des informations décrivant des éléments de réseau importants pour une exécution du service dans leurs propriétés fonctionnelles et dans leur agencement topologique sont stockées dans une base de données d'éléments de réseau et sont attribuées au service,
- les informations, stockées dans la base de données d'éléments de réseau, d'un dispositif de contrôle de qualité de service et/ou d'un dispositif de contrôle d'erreur sont mises à disposition lorsque le programme informatique est exécuté dans l'installation de traitement de données.

10. Programme de commande pour un dispositif de contrôle de qualité de service et/ou un dispositif de contrôle d'erreur d'un système de commande et de contrôle de réseau de communication selon la revendication 8, qui peut être chargé dans une mémoire de travail d'une installation de traitement de données attribuée au dispositif de contrôle de qualité de service et/ou au dispositif de contrôle d'erreur et présente au moins une partie de code, lors de l'exécution de laquelle
- des valeurs de mesure enregistrées sont comparées avec des informations stockées dans une base de données d'éléments de réseau, qui décrivent des éléments de réseau importants pour une exécution d'un service dans leurs propriétés fonctionnelles et dans leur agencement topologique, au niveau d'écarts inacceptables,
- dans le cas d'un écart inacceptable, un message concernant une insuffisance de service est généré avec indication du service concerné lorsque le programme informatique est exécuté dans l'installation de traitement de données.
